# EUROPÄISCHE PATENTSCHRIFT

(11) **EP 1 798 487 B1**
(45) Veröffentlichungstag und Bekanntmachung des Hinweises auf die Patenterteilung: **18.08.2010**
(21) Anmeldenummer: 06025505.6
(22) Anmeldetag: 09.12.2006
(51) Int. Cl.: F24D 11/00, F24D 12/02, F28D 20/02

(54) **Heiz- oder Brauchwasserwärmespeicher**
Heating- or sanitairy hot water accumulator
Accumulateur de chaleur pour chauffage ou de production d'eau chaude

(30) Priorität: 15.12.2005 AT 20042005; 14.01.2006 DE 102006001905
(43) Veröffentlichungstag der Anmeldung: 20.06.2007
(73) Patentinhaber: Vaillant GmbH, 42859 Remscheid (DE)
(72) Erfinder: Langer, Jens, 42349 Wuppertal (DE)
(74) Vertreter: Hocker, Thomas

(56) Entgegenhaltungen:
- WO-A-98/40684
- WO-A-2004/009728
- DE-A1- 2 922 162
- FR-A- 2 822 226
- JP-A- 57 087 593
- JP-A- 61 096 397
- JP-A- 2005 190 944
- US-A- 4 911 232

## Beschreibung

Die Erfindung bezieht sich auf einen Heiz- oder Brauchwasserwärmespeicher.

Aus dem Stand der Technik sind einteilige, wassergefüllte Heiz- oder Brauchwasserwärmespeicher bekannt, die von einer Umweltwärmequelle, zum Beispiel einem Solarabsorber, und / oder einem konventionellen Heizgerät beheizt werden.

Bei Warmwasserspeichern besteht das Problem, dass auf der einen Seite die Temperatur eine bestimmte Temperatur nicht übersteigen soll, um die Abstrahlverluste zu limitieren. Um Wärme auf einem bestimmten Niveau entnehmen zu können, ist eine bestimmte Mindesttemperatur in einem Teilbereich notwendig. Andererseits muss die Temperatur zumindest temporär oberhalb 55°C gehalten werden, um Legionellenbildung zu vermeiden. Hieraus resultiert ein relativ kleiner Temperaturbereich, in dem sich die Speichertemperatur aufhalten darf. Somit ist ein relativ großer Speicherbehälter notwendig, um viel Wärme aufnehmen zu können. Ein großes Volumen verfügt über eine große Oberfläche, so dass nennenswerte Verluste an die Umgebung auftreten.

Die WO 2003/064931 A1 zeigt ein Wand- und Deckelement mit einem Phasenwechselmaterial zur temporären Zwischenspeicherung von aus Räumen abgeführter Wärme, die im Bedarfsfall wieder genutzt werden kann. Hierbei findet eine Emulsion aus Wasser und mikroverkapseltem Paraffin Verwendung, um die Feuerresistenz zu erhöhen und den Austritt von Paraffin zu vermeiden. Die schlechte Wärmeleitfähigkeit des Paraffins wird durch die Beimengung von Graphit wettgemacht.

Aus DE 29 22 162 A1 ist eine Emulsion aus Wasser und Stearinsäure (C18H3602) bekannt. Die Emulsion wird in einem wärmeisolierten Tank bevorratet und wird in einem geschlossenen, Emulsion führenden Kreislauf über einen Wärmetauscher mit einem Sonnenheizer beheizt. In einem weiteren Wärmetauscher, der mit dem Tank Emulsion führend verbunden ist, kann Wärme auf eine Raumheizung übertragen werden.

Die EP 1 482 254 A1 zeigt zwar einen Latentwärmespeicher, welcher mit einer Brennstoffzelle verbunden ist, um bei nahezu konstanter Temperatur Wärme speichern zu können.

Aus DE 30 24 201 A1 ist eine Wärmepumpe mit Latentwärmespeicher und Ausdehnungsgefäß bekannt. Das Ausdehnungsgefäß dient zur Kompensation der Volumenänderung des Mediums in einer Rohrschlange zur Erwärmung des Latentwärmespeichers.

Aus US 4 911 232 ist ein einziger, mikroverkapseltes Latentwärmespeichermaterial führender Kreislauf, in dem eine Wärmequelle, ein Speicher, ein Wärmeverbraucher und eine Pumpe in Serie geschaltet sind, bekannt. Dementsprechend sind die Wärmezufuhr und die Wärmeabgabe nicht entkoppelbar.

Aufgabe der vorliegenden Erfindung ist es, die Wärmekapazität eines Heiz- oder Brauchwasserwärmespeichers zu erhöhen und dabei das notwendige Speichervolumen und das notwendige Temperaturniveaus zu reduzieren.

Erfindungsgemäß wird dies gemäß Anspruch 1 dadurch gelöst, dass der Wärmespeicher mit einer Emulsion (PCS) aus Wasser und Latentspeichermaterialien (Phase Change Materials, PCM) gefüllt ist und der Wärmespeicher mit der Wärmequelle und / oder dem Wärmeverbraucher in jeweils einem Emulsion (PCS) führenden Kreislauf verbunden ist.

Gemäß den Merkmalen des Anspruchs 2 wird die Emulsion in einem Heizgerät erhitzt und dann dem Speicher zugeführt. Alternativ hierzu wird gemäß Anspruch 3 die Emulsion im Speicher mittels eines von einem Heizgerät erwärmten Wärmeaustauscher erhitzt.

Besonders vorteilhaft ist eine Mischung aus Wasser beziehungsweise Wasserglykol und mikrogekapseltem Paraffin.

Paraffin (CₙH₂ₙ₊₂) stellt eine Sammelbezeichnung für gesättigte Kohlenwasserstoffgemische dar, die hauptsächlich aus Erdöl gewonnen werden. Paraffine, die auch als Wachse bezeichnet werden, sind organische Stoffe, die nach der Raffination geruchlos, geschmacklos und ungiftig sind. Es wird zwischen Normalparaffine und Isoparaffine unterschieden. Normalparaffine sind einfache, lang gestreckte Ketten. Isoparaffine haben von einer langen Grundkette verzweigende Äste. Für wärmetechnische Anwendungen kommen überwiegend Normalparaffine zum Einsatz. Die Schmelztemperatur der Paraffine liegt zwischen 30 bis 90°C bei einer Zahl n zwischen 18 und 50. Mit steigender Molekülkettenlänge bzw. steigender Molmasse nimmt die Schmelztemperatur des Materials stetig zu. Paraffine sind gut für thermische Anwendungen geeignet. Der Vorteil der Paraffine liegt in der Nutzung der latenten Wärme während des Phasenwechsels. Ein geringerer Teil wird als sensible Wärme gespeichert. Die spez. Wärmekapazität von Wärmeparaffin liegt bei etwa 2,1 kJ/(kg·K), die Schmelzenthalpie bei 180 bis 230 kJ/kg. Hierdurch sind Paraffine bestens zur Wärmespeicherung geeignet. Paraffin speichert beim Phasenwechsel etwa soviel Wärme wie die gleiche Menge Wasser bei einer Temperaturdifferenz von 40 K. Demzufolge werden Paraffine vorzugsweise im Bereich ihrer Schmelztemperatur eingesetzt, da sie in diesem Bereich viel Wärme speichern können. Es ist jedoch darauf zu achten, dass beim Phasenübergang fest (Dichte 0,8 bis 0,9 kg/l) zu flüssig (Dichte 0,75 bis 0,85 kg/l) das Volumen um etwa 10 % zunimmt, so dass bei mit Paraffinen gefüllten Wärmespeichern eine Kompensationsvorrichtung vorgesehen sein sollte.

Eine Sonderform stellen PCS (Phase Change Slurries) dar. Hierbei wird Paraffin in kleinen Kügelchen (Durchmesser 1 bis 20 µm) von einer Hülle (Wandstärke deutlich kleiner 200 nm) umschlossen (Mikroverkapselung). Diese Kügelchen werden in Wasser gegeben, wodurch eine Emulsion aus Wasser und Kügelchen mit PCM-Eigenschaften, d.h. einer hohen Energieaufnahmemöglichkeit in einem kleinen Temperaturbereich, entsteht. Durch geeignete Wahl des PCM kann die Schmelztemperatur des PCS individuell in einem Bereich vorzugsweise zwischen 6 und 65°C eingestellt werden.

Ein besonderer Vorteil des PCS gegenüber PCM stellt die Tatsache dar, dass das Paraffin beim PCS durch die Kügelchen weiterhin mobil bleibt. Bei konventionellem Paraffin findet die Erstarrung zunächst an den Wärmeübertragerflächen des kühlenden Mediums statt. Das Paraffin lagert sich am Wärmeübertrager ab und bildet eine Dämmschicht, so dass die weitere Wärmeübertragung deutlich erschert wird. Die Wärmeleitfähigkeit von festem Paraffin liegt bei lediglich 0,18 W/(mK). Demgegenüber erstarrt bei PCS lediglich das Paraffin in den Kügelchen. Die Kügelchen können von der Wärmeübertragerfläche weg transportiert werden und somit die Wärmeübertragung auf das restliche PCS erleichtern.

Gemäß den Merkmalen des Anspruchs 4 weist der Latentspeicher eine Vorrichtung zum Volumenausgleich auf. Sofern es sich beim dem Phasenwechselenergie speichernde Medium um PCS handelt, kann ein konventionelles Ausdehnungsgefäß mit einem von einer Membran abgetrennten Stickstoffpolster handeln. Eine derartige Vorrichtung ist nicht notwendig, wenn das PCS direkt im Heizgerät erhitzt wird und das Heizgerät selbst über ein Ausdehnungsgefäß verfügt.

Gemäß den Merkmalen des abhängigen Anspruchs 5 kann der Wärmeübergang durch Umwälzung der Emulsion verbessert werden.

Gemäß den Merkmalen des abhängigen Anspruchs 6 wird dem Wärmespeicher eine Vorrichtung zur Nacherhitzung nachgeschaltet, um die Temperatur des Wärmespeichers auf einem vergleichsweise niedrigen Temperaturniveau, das zum Beispiel ausreichend zum Duschen ist, halten zu können und mittels Nacherhitzung auf ein höheres Temperaturniveau, das zum Beispiel zum Spülen benötigt wird, zu erhitzen.

Die Merkmale des abhängigen Anspruchs 7 sehen vor, dass die Wärmequelle eine Brennstoffzelle ist. Bei Brennstoffzellen soll die Wärme möglichst auf nahezu konstantem Temperaturniveaus ausgekoppelt werden. Daher ist die Kombination einer Brennstoffzelle mit einem Latentwärmespeicher besonders sinnvoll, da dieser große Mengen Wärme auf nahezu konstantem Temperaturniveau aufnehmen kann.

Die Erfindung wird nun anhand der Zeichnungen detailliert erläutert.

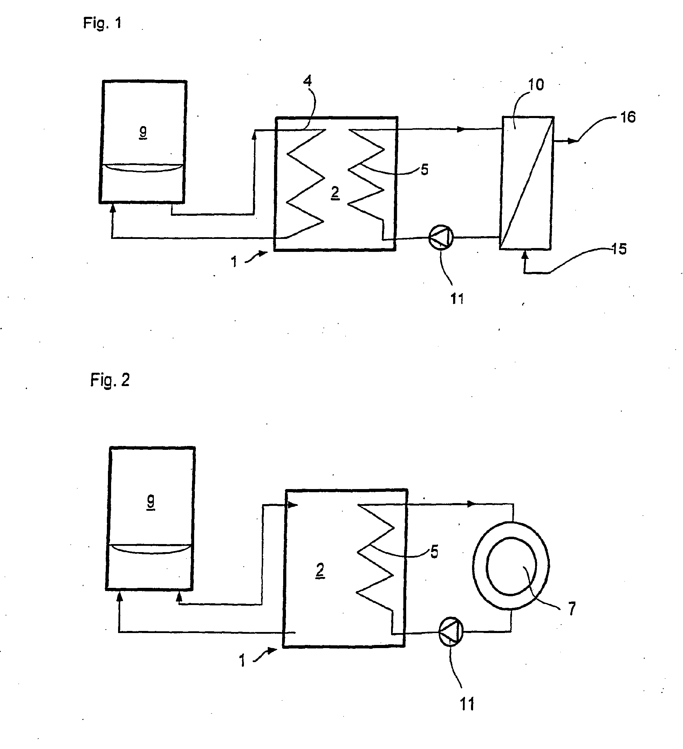

Figur 1 zeigt eine Heizung mit einem Wärmespeicher 1, der mit PCS 2 gefüllt ist. Die Schmelztemperatur des PCS 2 ist auf die Solltemperatur des Speicherteils abgestimmt und kann nicht mehr verändert werden. Der Wärmespeicher 1 ist einerseits über einen Wärmeaustauscher 4 innerhalb des Wärmespeichers 1 mit einem konventionellen Heizgerät 9 verbunden. Andererseits befindet sich in dem Wärmespeicher 1 ein Wärmeaustauscher 5, der mit einem Plattenwärmeaustauscher 10 einer nicht detaillierter dargestellten Frischwasserstation mit Kaltwasserzufuhr 15 und Brauchwasservorlaufleitung 16 verbunden ist. Zwischen dem Plattenwärmeaustauscher 10 und dem Wärmespeicher 1 befindet sich eine Pumpe 11.

Beim Betrieb erwärmt das Heizgerät 9 den Wärmespeicher 1 mit dem darin befindlichen PCS 2 über den von oben nach unten durchströmten Wärmeaustauscher 4 auf eine Solltemperatur bis zu 5 Kelvin oberhalb der Schmelztemperatur des PCS 2, so dass das PCS 2 vollständig geschmolzen ist. Hierbei wird zunächst das PCS 2 im oberen Bereich des Wärmespeichers 1 geschmolzen; durch die Abkühlung des Wärmeträgers im Wärmeaustauscher 4 findet zunächst im unteren Bereich des Wärmespeichers 1 noch keine Phasenumwandlung statt. Wird warmes Brauchwasser benötigt, so läuft die Pumpe 11 an und fördert Wasser in den Wärmeaustauscher 5. Dort wird Wärme aus dem PCS 2 aufgenommen, die wiederum im Plattenwärmeaustauscher 10 der Frischwasserstation Wärme auf kaltes, zuströmendes Brauchwasser abgibt. Wird die Schmelztemperatur im Wärmespeicher 1 unterschritten, so gibt das PCS 2 Wärme ab ohne dass die Temperatur im Wärmespeicher 1 fällt. Erst wenn das gesamte PCS 2 kristallisiert ist, fällt die Temperatur im Wärmespeicher 1.

Figur 2 zeigt einen erfindungsgemäßen Wärmespeicher 1, der sich vom zuvor beschriebenen Wärmespeicher dadurch unterschiedet, dass das PCS 2 direkt im Heizgerät 9 erhitzt wird und somit auf den Sekundärwärmeaustauscher im Wärmespeicher 1 verzichtet werden kann. Anstelle des Plattenwärmeaustauschers 10 der Frischwasserstation dient mindestens ein Heizkörper 7 für Raumwärme als Verbraucher der gespeicherten Wärme.

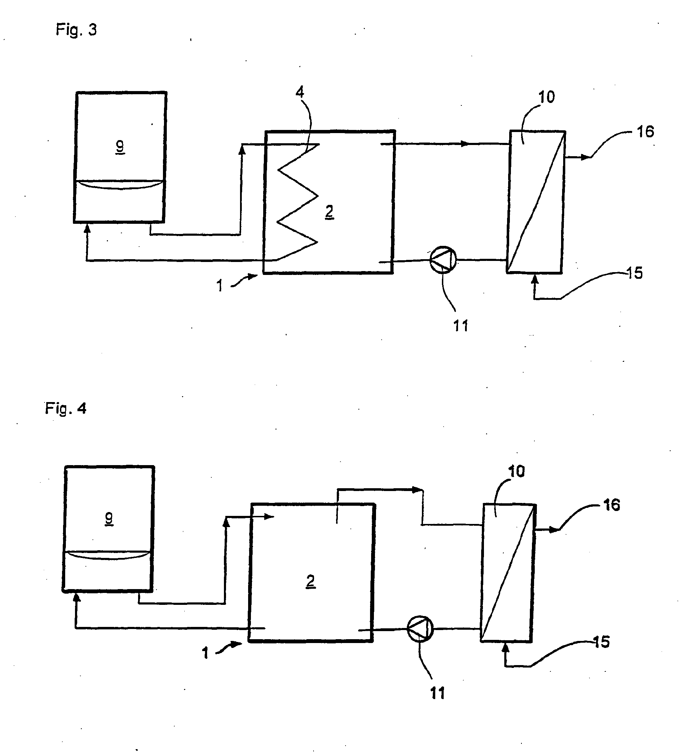

Figur 3 zeigt einen mittels Wärmetauscher 4 beheizten Wärmespeicher 1 mit PCS 2 im Inneren, bei dem das PCS mittels Pumpe 11 im Kreislauf zum Plattenwärmeaustauscher 10 einer Frischwasserstation gefördert wird.

Figur 4 zeigt den Fall, dass das PCS 2 im Heizgerät 9, der Wärmespeicher als Schichtenspeicher fungiert und das PCS 2 mittels Pumpe 11 im Kreislauf zum Plattenwärmeaustauscher 10 einer Frischwasserstation gefördert wird.

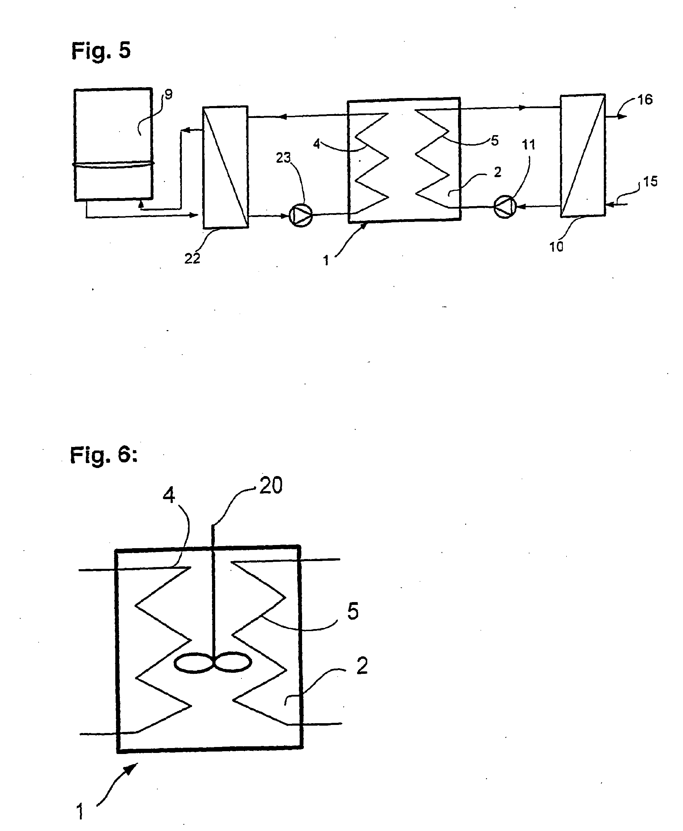

Zwischen Heizgerät 9 und Wärmetauscher 4 kann ein weiterer Wärmetauscher 22 mit weiterem Kreislauf und Pumpe 23 gemäß Figur 5 geschaltet werden.

In Figur 6 ist ein Wärmespeicher 1 mit PCS 2 dargestellt, bei dem sich ein Rührwerk 20 im Wärmespeicher 1 befindet, um den Speicherinhalt zu homogenisieren und den Wärmeübergang zu verbessern. Letzteres geschieht auch dadurch, dass die Reynoldszahl durch die Erhöhung der Strömungsgeschwindigkeit erhöht wird.

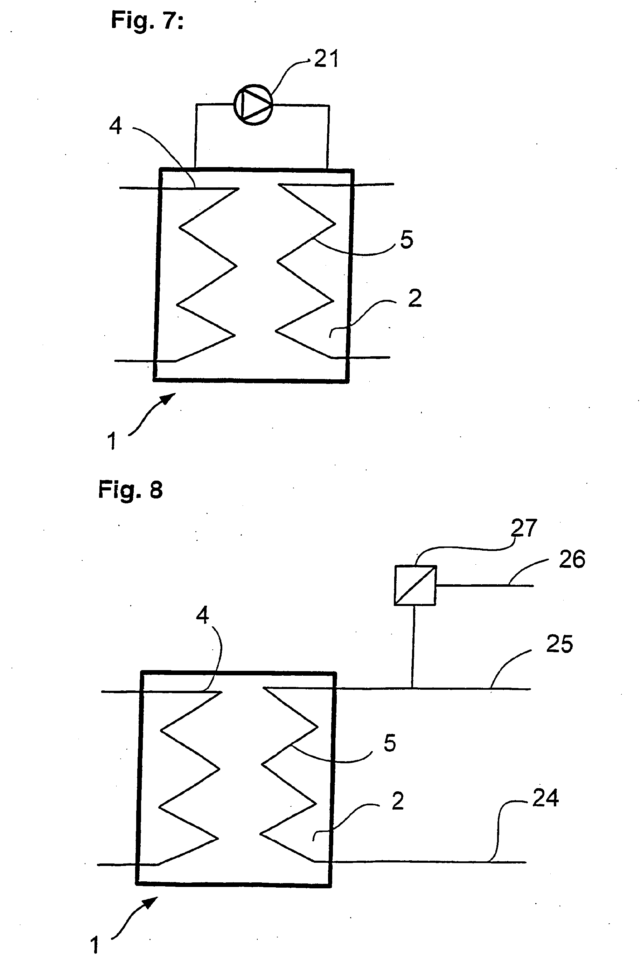

Alternativ hierzu wird gemäß Figur 7 das PCS 2 mittels Pumpe 21 im Wärmespeicher 1 umgewälzt.

Figur 8 zeigt den Fall, dass der Wärmespeicher 1 nur zur Beheizung auf ein Niveau dient, mit dem Wasser z.B. für Duschen oder Baden bereitgestellt wird. Wasser, das dem Wärmespeicher 1 über die Kaltwasserleitung 24 zugeführt wird, kann entweder über die Warmwasserleitung 25 zum Duschen oder Baden verwendet werden oder über den Wärmetauscher 27 zur Heißwasserleitung 26 z.B. zum Spülen geleitet werden. Der Wärmetauscher 27 kann direkt oder indirekt beheizt sein. Hierdurch lassen sich die Bereitschafts- und Verteilverluste durch die niedrige Speichertemperatur verringern. Durch das niedrigere Temperaturniveau können Wärmepumpen und Brennwertgeräte effizienter betrieben werden.

## Patentansprüche

1. Kreisläufe mit einem_Wärmespeicher (1) für Heiz- und / oder Brauchwasser, welcher über einen Kreislauf mit einer Wärmequelle (9) und über einen anderen Kreislauf mit mindestens einem Wärmeverbraucher (10, 7) verbunden ist, wobei der Wärmespeicher mit einer Emulsion (PCS, 2) aus Wasser und Paraffin gefüllt ist, **dadurch gekennzeichnet, dass** das Paraffin der Emulsion (PCS, 2) des Wärmespeichers mikroverkapselt ist, wodurch die Emulsion ein Phase Change Slurry (PCS) darstellt und der Wärmespeicher (1) mit der Wärmequelle (9) und / oder dem Wärmeverbraucher (10, 7) in jeweils einem Emulsion (PCS, 2) aus Wasser und mikroverkapseltem Paraffin d.h ein Phase Change Slurry führenden Kreislauf verbunden ist.

2. Wärmespeicher (1) nach Anspruch 1, **dadurch gekennzeichnet, dass** das PCS (2) direkt in einem konventionellen Heizgerät (9) erhitzt wird.

3. Wärmespeicher (1) nach Anspruch 1, **dadurch gekennzeichnet, dass** die Emulsion (2) im Wärmespeicher (1) mittels eines von einem Heizgerät (9) erwärmten Wärmeaustauschers (4) erhitzt wird.

4. Wärmespeicher (1) nach einem der Ansprüche 1 bis 3, **dadurch gekennzeichnet, dass** der Wärmespeicher (1) eine Vorrichtung zum Volumenausgleich, vorzugsweise ein Ausdehnungsgefäß, aufweist.

5. Wärmespeicher (1) nach einem der Ansprüche 1 bis 4, **dadurch gekennzeichnet, dass** im Wärmespeicher (1) die Emulsion (2) mittels einer Vorrichtung, vorzugsweise Rührwerk (20) oder Pumpe (21), umgewälzt wird.

6. Wärmespeicher (1) nach einem der Ansprüche 1 bis 5, **dadurch gekennzeichnet, dass** dem Wärmespeicher (1) eine Vorrichtung zur Nacherhitzung, vorzugsweise ein direkt oder indirekt beheizter Wärmetauscher (27) nachgeschaltet ist.

7. Wärmespeicher (1) nach einem der Ansprüche 1 bis 6, **dadurch gekennzeichnet, dass** die Wärmequelle (9) eine Brennstoffzelle ist.

## Claims

1. Circulation systems comprising a heat accumulator (1) for heating and/or sanitary water, which is connected via one circuit with a heat source (9) and via another circuit with at least one heat consumer (10, 7), such heat accumulator being filled with an emulsion (PCS, 2) of water and paraffin, **characterised in that** the paraffin of the emulsion (PCS, 2) of the heat accumulator is microencapsulated, so that the emulsion constitutes a phase change slurry (PCS), and the heat accumulator (1) is connected with the heat source (9) and/or the heat consumer (10, 7), respectively, with in each case a circuit containing an emulsion (PCS, 2) of water and microencapsulated paraffin, i. e. a phase change slurry (PCS).

2. A heat accumulator (1) as claimed in Claim 1, **characterised in that** the PCS (2) is directly heated in a conventional heater (9).

3. A heat accumulator (1) as claimed in Claim 1, **characterised in that** the emulsion (2) is heated in the heat accumulator (1) by means of a heat exchanger (4) heated by a heater (9).

4. A heat accumulator (1) as claimed in any of the Claims 1 to 3, **characterised in that** the heat accumulator (1) contains a volume control device, preferably an expansion vessel.

5. A heat accumulator (1) as claimed in any of the Claims 1 to 4, **characterised in that** the emulsion (2) is circulated in the heat accumulator (1), preferably by an agitator (20) or a pump (21).

6. A heat accumulator (1) as claimed in any of the Claims 1 to 5, **characterised in that** downstream of the heat accumulator (1) provision is made for a reheating device, preferably a directly or indirectly heated heat exchanger (27).

7. A heat accumulator (1) as claimed in any of the Claims 1 to 6, **characterised in that** the heat source (9) is a fuel cell.

## Revendications

1. Circuits comprenant un accumulateur de chaleur (1) pour eau de chauffage et/ou sanitaire qui est relié par le biais d'un circuit à une source de chaleur (9) et par le biais d'un autre circuit à au moins un consommateur de chaleur (10, 7), l'accumulateur de chaleur étant rempli d'une émulsion (PCS, 2) composée d'eau et de paraffine, **caractérisés en ce que** la paraffine de l'émulsion (PCS, 2) de l'accumulateur de chaleur est en microcapsules, moyennant quoi l'émulsion présente une boue à changement de phase (PCS) et l'accumulateur de chaleur (1) est relié à la source de chaleur (9) et/ou au consommateur de chaleur (10, 7) dans une émulsion respective (PCS, 2) composée d'eau et de paraffine en microcapsules, c'est-à-dire un circuit acheminant une boue à changement de phase (PCS).

2. Accumulateur de chaleur (1) selon la revendication 1, **caractérisé en ce que** la PCS (2) est directement chauffée dans un appareil de chauffage conventionnel (9).

3. Accumulateur de chaleur (1) selon la revendication 1, **caractérisé en ce que** l'émulsion (2) est chauffée dans l'accumulateur de chaleur (1) au moyen d'un échangeur de chaleur (4) chauffé par un appareil de chauffage (9).

4. Accumulateur de chaleur (1) selon l'une quelconque des revendications 1 à 3, **caractérisé en ce que** l'accumulateur de chaleur (1) présente un dispositif pour l'équilibre des volumes, de préférence un bac d'expansion.

5. Accumulateur de chaleur (1) selon l'une quelconque des revendications 1 à 4, **caractérisé en ce que** l'émulsion (2) circule au moyen d'un dispositif, de préférence un agitateur (20) ou une pompe (21), dans l'accumulateur de chaleur (1).

6. Accumulateur de chaleur (1) selon l'une quelconque des revendications 1 à 5, **caractérisé en ce qu'**un dispositif pour le réchauffage, de préférence un échangeur de chaleur (27) chauffé directement ou indirectement, est monté en aval de l'accumulateur de chaleur (1).

7. Accumulateur de chaleur (1) selon l'une quelconque des revendications 1 à 6, **caractérisé en ce que** la source de chaleur (9) est une pile à combustible.
